# EUROPÄISCHE PATENTSCHRIFT

(11) **EP 2 766 952 B1**
(45) Veröffentlichungstag und Bekanntmachung des Hinweises auf die Patenterteilung: **27.04.2022**
(21) Anmeldenummer: 12784205.2
(22) Anmeldetag: 10.10.2012
(51) Int. Cl.: H01Q 21/06, G01S 13/93

(54) **RADARSYSTEM FÜR EIN STRAßENFAHRZEUG MIT VERBESSERTEN KALIBRIERMÖGLICHKEITEN**
RADAR SYSTEM FOR A ROAD VEHICLE WITH IMPROVED CALIBRATING POSSIBILITIES
SYSTÈME DE RADAR POUR VÉHICULE ROUTIER PRÉSENTANT DES POSSIBILITÉS D'ÉTALONNAGE AMÉLIORÉES

(30) Priorität: 15.10.2011 DE 102011116129; 25.02.2012 DE 102012003877
(43) Veröffentlichungstag der Anmeldung: 20.08.2014
(73) Patentinhaber: Volkswagen Aktiengesellschaft, 38440 Wolfsburg (DE); S.M.S. Smart Microwave Sensors GmbH, 38108 Braunschweig (DE)
(72) Erfinder: MEINECKE, Marc-Michael, 38524 Sassenburg (DE); JERHOT, Jiri, 38442 Wolfsburg (DE); MENDE, Ralph, 38106 Braunschweig (DE); BEHRENS, Marc, 38154 Königslutter (DE)
(74) Vertreter: Patentanwälte Bressel und Partner mbB
(86) Internationale Anmeldenummer: PCT/EP2012/004233
(87) Internationale Veröffentlichungsnummer: WO 2013/053467

(56) Entgegenhaltungen:
- DE-A1-102004 004 193
- DE-A1-102004 035 502
- DE-A1-102009 046 499
- JP-A- 2011 027 695
- US-A1- 2003 090 411
- US-B1- 6 246 365
- US-B1- 6 556 166

## Beschreibung

Die Erfindung betrifft ein Radarsystem und ein Verfahren zur verbesserten Kalibrierung von in Straßenfahrzeugen verbauten Radarsystemen.

Aus dem Stand der Technik ist es bekannt, in Kraftfahrzeuge Radarsensoren und Radarsysteme einzubauen, welche Strahlung in Form von elektromagnetischen Wellen mit Frequenzen, die in der Regel im Gigahertzbereich liegen, welche als Radarstrahlung bezeichnet wird, aussenden und die an Objekten im Umfeld reflektierte Radarstrahlung empfangen. Aus der Laufzeit der Radarstrahlung kann auf eine Entfernung zwischen dem Radarsystem bzw. den zum Senden und Empfangen genutzten Antennenanordnungen und dem die Radarstellung reflektierenden Objekt oder den Objekten geschlossen werden. Moderne Antennen für Automobilradare nutzen häufig Patch-Antennen. In diesem Fall werden üblicherweise Antennenanordnungen verwendet, welche mehrere Antennenstränge aufweisen, die in der Antennenanordnung benachbart zueinander angeordnet sind. Da die Laufzeitunterschiede für unterschiedliche Antennenstränge leicht unterschiedlich sind, kann bei geeigneter Auswertung auch ein so genannter Azimutwinkel oder Azimutalwinkel ermittelt werden. Gegebenenfalls können auch mehrere Azimutalwinkel für mehrere Objekte ermittelt werden. Diese geben in einer Ebene parallel zu der Fahrbahnebene, auf der sich das Straßenfahrzeug bewegt, beispielsweise relativ zu einer Geradeausfahrtrichtung jeweils den Winkel zu dem die entsprechenden Radarstrahlen reflektierenden Objekt an.

Die Entfernungs- und Richtungsinformationen werden in Straßenfahrzeugen für die unterschiedlichsten Systeme, beispielsweise Kollisionswarnsysteme oder auch Geschwindigkeitsregelsysteme, die ein Unterschreiten eines Sicherheitsabstands zu einem vorausfahrenden Fahrzeug vermeiden (Adaptive Cruise Control - ACC) genutzt, um nur einige Fahrzeugsysteme zu benennen. Da es sich bei diesen Systemen um sicherheitsrelevante Systeme handelt, ist es notwendig, dass die aus dem Radarsystem abgeleiteten Informationen eine hohe Zuverlässigkeit und Korrektheit aufweisen. Hierfür ist es notwendig, dass eine Ausrichtung des Radarsystems bzw. der Antennenanordnungen des Radarsystems bezüglich einer Fahrzeugachse bzw. Fahrachse, welche eine Geradeausfahrtrichtung des Fahrzeugs parallel zu einer ebenen Fläche angibt, auf der das Straßenfahrzeug fährt, bekannt ist und eine vorgegebene Orientierung eingehalten wird. Bei den aus dem Stand der Technik bekannten Systemen ist der hierfür notwendige Aufwand, welcher bei der Herstellung des Fahrzeugs bei einer so genannten End-Off-Line-Kalibrierung, also einer Kalibrierung am Ende der Fertigungsstraße entsteht, sowohl hinsichtlich der technisch benötigten Einrichtungen, einer benötigten Justagezeit und eines hierfür speziell geschulten Produktionspersonals sehr hoch. Daher ist es wünschenswert, die Kalibrierung des Radarsystems, insbesondere bei der Endkalibrierung der Fahrzeugherstellung, zu verbessern.

Aus der DE 10 2006 058 303 A1 sind ein Verfahren zur Erkennung einer vertikalen Fehlausrichtung, also senkrecht zu der Ebene, in der der Azimutalwinkel gemessen wird, eines Radarsensors bekannt. Beschrieben ist dort ein Verfahren zur Erkennung einer vertikalen Fehlausrichtung der Strahlungscharakteristik eines Radarsensors eines Regelsystems für ein Kraftfahrzeug, insbesondere eines Fahrgeschwindigkeits- und/oder adaptiven Fahrgeschwindigkeitssystems, welches die Schritte umfasst: Ermitteln der Empfangsleistung der an einem Objekt reflektierten Radarstellung; Kompensieren einer Abstandsabhängigkeit und einer horizontalen Winkelabhängigkeit gemäß der Radargleichung; Zuordnen einer Signatur zu der so verarbeiteten Empfangsleistung; Vergleichen der Signatur mit einer einem gleichartigen Objekt zugeordneten und in einer Speichereinrichtung gespeicherten Signatur und Ermitteln einer Größe und Richtung der vertikalen Fehlausrichtung des Radarsensors aus dem Vergleich. Dieses Verfahren weist u.a. die Schwierigkeit auf, dass vermessene Objekte "erkannt" werden müssen, um festzustellen, zu welchem Objekt, zu dem bereits eine Signatur gespeichert ist, dieses gleichartig ist.

Aus der DE 602 03 224 T2 ist ein Verfahren zur Erkennung eines Auftretens einer axialen Verschiebung in einer horizontalen Richtung bei einem auf einem Fahrzeug angeordneten Radar beschrieben, welches die Schritte umfasst: Messen einer Frequenz, mit der eine mittels des Radars durchgeführte Fahrzeug-zu-Fahrzeug-Distanzkontrolle durch Drücken eines Bremspedals freigegeben oder rückgestellt wird; und Bestimmen, dass eine Achse des Rades in horizontaler Richtung verschoben ist, wenn die gemessene Frequenz der Kontrollfreigabe oder Rückstellung größer als ein vorbestimmter Grenzwert ist. Diese Lösung geht von der Annahme aus, dass bei einer horizontalen Dejustage eines Systems, welches einen Fahrzeug-zu-Fahrzeug-Abstand regelt, manuelle Eingriffe seitens eines Fahrers in solchen Situationen vermehrt auftreten, bei denen aufgrund einer horizontalen Fehljustage nicht in Wirklichkeit ein vorausfahrendes Fahrzeug bezüglich des Abstands vermessen wird, sondern ein auf einer benachbarten Spur befindliches Objekt vermessen wird. Die bekannten Verfahren eignen sich nur begrenzt, um eine Kalibration, insbesondere eine abschließende Kalibration bei der Herstellung eines Straßenfahrzeugs, insbesondere eines Personenkraftwagens, auszuführen.

Aus der DE 10 2009 046 499 A1 ist ein Radarsystem bekannt, bei dem eine Empfangsantenne konfiguriert ist, indem zumindest drei Gruppenantennen, in denen eine Vielzahl von Elementantennen angeordnet sind, in einer Reihe angeordnet sind, um wechselseitig in der horizontalen Richtung benachbart zu sein, wobei die mittlere Gruppenantenne unter den drei Gruppenantennen so angeordnet ist, dass der Ort des zugehörigen Phasenmittelpunkts in der vertikalen Richtung in Bezug auf die anderen Gruppenantennen so verschoben ist, dass die Phasenmittelpunkte der drei Gruppenantennen ein gleichschenkliges Dreieck bilden. Die Radarvorrichtung korrigiert die Phasendifferenz zwischen Phasen von Funkwellen, die jeweils durch zwei benachbarte Gruppenantennen unter den drei Gruppenantennen empfangen werden, auf der Grundlage der Beziehung der Phasen der Funkwellen, die durch jede der drei Gruppenantennen empfangen werden.

Auch die US 6,246,365 B1 und JP2011-027695 A zeigen Radarsysteme mit Antennenelementen, die in horizontaler Richtung nebeneinander angeordnet sind und von denen mindestens ein Antennenelement zusätzlich vertikal versetzt ist.

Aus der US 6,556,166 B1 ist ein Verfahren zum Messen einer Fehlausrichtung des Elevationswinkel eines Automobilradarsensors beschrieben, der zwei oder mehr Ziele unterscheiden kann. Die Ziele werden unter unterschiedlichen Elevationswinkeln bezüglich einer gewünschten Elevationsachse angeordnet. Das Ausmaß der Fehlausrichtung wird anhand des Verhältnisses oder der Differenz der zurückgeworfenen Signalamplituden der beiden Ziele ermittelt. Auch die US 2003/0090411A1 beschreibt ein Verfahren zum Ausrichten des Elevationwinkels eines Automobilradars. Mindestens drei Radarreflektoren werden in drei Reihen mit unterschiedlichen Elevationwinkeln und an drei unterschiedlichen horizontalen Positionen angeordnet, so dass die mittlere Reihe horizontal von den anderen Reihen unterscheidbar ist. Es werden horizontale Abtastungen für unterschiedliche Elevationswinkel der Radarstrahlung vorgenommen. Der Elevationswinkel der Radarstrahlung wird auf jenen Elevationswinkel festgelegt, bei dessen horizontaler Abtastung die mittlere Reihe erkannt wurde.

Die DE 10 2004 035 502 A1 beschreibt eine Radarvorrichtung für Fahrzeuge sowie ein Verfahren zur Einstellung eines Befestigungswinkels beim Anbringen der Radarvorrichtung an einem Fahrzeug.

Die DE 10 2004 004 193 A1 beschreibt ein Verfahren und eine Vorrichtung zur Winkeljustage eines Sensors in einem Kraftfahrzeug. Beschrieben ist ein optisches Verfahren zum Vermessen der Ausrichtung eines Gehäuses. Für den Fall, dass es sich um einen Radarsensor handelt, wird davon ausgegangen, dass die Empfangsantennen relativ zu dem Gehäuse jeweils korrekt und optimal ausgerichtet sind.

Der Erfindung liegt somit die technische Aufgabe zugrunde, ein Verfahren anzugeben, mit dem eine verbesserte und einfache Kalibration bei der Herstellung und gegebenenfalls später im Normalbetrieb möglich ist.

Die Aufgabe wird erfindungsgemäß durch ein Verfahren mit den Merkmalen des Patentanspruchs 1 gelöst. Vorteilhafte Ausgestaltungen der Erfindung ergeben sich aus den Unteransprüchen.

Radarsysteme für Fahrzeuge nutzen meist Antennenanordnungen, die in der Regel mehrere gleichartige Antennenstränge umfassen, welche eine Längsrichtung aufweisen, entlang derer sie eine größere Ausstrahlung als quer hierzu aufweisen. Entlang der Längsrichtung sind in einem Antennenstrang in der Regel mehrere einzelne Antennenfelder oder Antennenpatches angeordnet, die so miteinander verdrahtet sind, dass diese mittels eines Signals beim Aussenden von Radarwellen beaufschlagt werden oder ein Empfangssignal beim Empfangen von Radarsignalen liefern.

Der Erfindung liegt die Idee zugrunde, die Sende- und/oder Empfangsantennenanordnung des verwendeten Radarsystems so zu verändern, dass eine Azimutalmessung möglichst nicht hinsichtlich ihrer Qualität beeinträchtigt wird und dennoch zusätzlich eine Elevationswinkelmessung möglich wird. Hierzu wird entweder die Empfangsantennenanordnung oder die Sendeantennenanordnung oder gegebenenfalls sowohl die Sendeempfangsanordnung als auch die Empfangsantennenanordnung modifiziert. Entgegen den üblicherweise verwendeten Antennenanordnungen, welche mehrere Antennenstränge aufweisen, die jeweils eine Längsrichtung aufweisen, entlang derer die einzelnen Antennenstränge eine größere Ausdehnung als quer hierzu aufweisen, und bei denen die Antennenstränge entlang ihrer Längsrichtungen parallel zueinander und in der Regel quer zu der Längsrichtung gleich beabstandet angeordnet sind, wird in mindestens einer der Antennenanordnungen einer von mehreren Antennensträngen in einer Richtung versetzt angeordnet, welche parallel zu der Längsrichtung eines anderen Antennenstrangs der mehreren Antennenstränge ist, bezüglich dessen dieser eine Antennenstrang versetzt angeordnet wird. Hierdurch wird es möglich, nicht nur in der Horizontalen, also einer Azimutalmessebene, den Azimutalwinkel zu Objekten im Umfeld zu ermitteln, die Radarstrahlung reflektieren, sondern auch zusätzlich einen Elevationswinkel, welcher senkrecht zum Azimutalwinkel und somit senkrecht zur Azimutalmessebene bestimmt wird. Gewöhnlich ist ein Radarsystem in einem Straßenfahrzeug so bezüglich der Fahrzeugachse bzw. Fahrachse angeordnet, dass der Azimutalwinkel in einer horizontal verlaufenden Ebene, d.h. in einer Ebene parallel zur Straßenebene, ermittelt wird. Der Elevationswinkel wird somit in einer vertikal verlaufenden Ebene ermittelt. Fehljustagen beim Einbau des Radarsensors bzw. der zugehörigen Antennenanordnungen können auf einfache Weise ermittelt werden, indem am Ende der Fertigungsstraße mit dem Radarsensor wohldefinierte Objekte, welche relativ zu dem Fahrzeug bzw. der Fertigungsstraße angeordnet sind, vermessen werden und sowohl der Azimutalwinkel als auch der Elevationswinkel für mindestens ein Objekt, vorzugsweise mehrere, Objekte relativ zur Fahrzeugachse bzw. Fahrachse ermittelt werden.

### Definitionen

Als Fahrachse oder Fahrzeugachse wird eine Achse des Fahrzeugs bezeichnet, die mittig durch das Fahrzeug verläuft und entlang derer sich ein Fahrzeug bei Geradeausfahrt bewegt, wobei die Achse parallel zu einer Straßenebene orientiert ist, wenn sich das Fahrzeug in Ruhe oder in unbeschleunigter geradliniger gleichförmiger Bewegung auf der ebenen Fläche befindet.

Eine Antennenanordnung ist eine Anordnung aus mehreren Antennensträngen, welche relativ zueinander angeordnet sind und gemeinsam zum Aussenden oder zum Empfangen von Radarstrahlung genutzt werden.

Ein Antennenstrang ist eine technische Einrichtung, welche bei Beaufschlagung mit einem elektrischen Hochfrequenzsignal geeigneter Frequenz Radarwellen abstrahlt bzw. bei einer Anordnung in einem elektromagnetischen Feld entsprechender Frequenz ein elektrisches Hochfrequenzsignal empfängt. Ein Antennenstrang weist jeweils eine Längsrichtung auf, entlang derer der Antennenstrang eine größere Ausdehnung als senkrecht zu der Längsrichtung aufweist. Bevorzugte Antennenstränge für das Aussenden und/oder Empfangen von Radarstrahlung, welche vorzugsweise im Wellenlängenbereich von etwa 24 GHz oder 77 GHz ausgestrahlt wird, umfassen mehrere entlang der Längsrichtung angeordnete Antennenfelder oder Antennenpatches, welche gemäß ihrer geometrischen Ausgestaltung und Beabstandung zueinander angepasst an eine Sollfrequenz der Radarstrahlung, die ausgesandt und/oder empfangen werden soll, miteinander verdrahtet sind, um ein Empfangssignal zu liefern bzw. mit einem Sendesignal beaufschlagt zu werden und eine entsprechende Radarstrahlung abzustrahlen.

Als Azimutalwinkel wird der Winkel bezeichnet, der in einer horizontalen Ebene relativ zur Fahrachse bzw. Fahrzeugachse ermittelt wird. Als Elevationswinkel wird der Winkel relativ zur Fahrzeug- oder Fahrachse bezeichnet, welcher senkrecht zur Azimutalrichtung bestimmt wird.

### Bevorzugte Ausführungsformen

Insbesondere wird ein Radarsystem zur Umfelderfassung eines Straßenfahrzeugs vorgeschlagen, welches umfasst: Eine Sendeantennenanordnung zum Aussenden von Radarstrahlung und eine Empfangsantennenanordnung zum Empfangen der an Objekten im Umfeld des Straßenfahrzeugs reflektierten Radarstellung sowie eine Auswerteeinrichtung; wobei die Empfangsantennenanordnung und die Sendeantennenanordnung jeweils mehrere Antennenstränge aufweisen, wobei jeder Antennenstrang eine Längsrichtung aufweist, entlang der der Antennenstrang eine größere Ausdehnung als senkrecht hierzu aufweist, wobei in jeder der Antennenanordnungen einige der Antennenstränge parallel zueinander angeordnet sind, wobei die Auswerteeinrichtung ausgebildet ist, anhand der empfangenen reflektierten Radarstrahlung für das die jeweilige Radarstrahlung reflektierende Objekte einen Azimutwinkel in einer Azimutalmessebene zu ermitteln, wobei die Azimutalmessebene senkrecht zu den Längsrichtungen der einigen Antennenstränge orientiert ist, wobei bei der Sendeantennenanordnung und/oder bei der Empfangsantennenanordnung zumindest einer der mehreren Antennenstränge gegenüber mindestens einem anderen der Antennenstränge bezüglich der Längsrichtung des mindestens einen anderen Antennenstrangs versetzt ist und die Auswerteeinrichtung ferner ausgebildet ist, einen Elevationswinkel für das die jeweilige Radarstrahlung reflektierende Objekt zu ermitteln, wobei der Elevationswinkel senkrecht zur Azimutalmessebene bestimmt wird. Durch ein Vergleichen des Azimutal- und Elevationswinkels für ein Objekt, dessen Position relativ zu dem Kraftfahrzeug bei der Messung bekannt ist, kann eine Kalibrationsinformation abgeleitet werden, die angibt, ob und gegebenenfalls in welcher Richtung das Radarsystem bzw. die Antennenanordnungen zu justieren sind.

Ein vorgeschlagenes Verfahren zum Kalibrieren eines Radarsystems eines Straßenfahrzeugs, bei dem das Radarsystem eine Sendeantennenordnung zum Aussenden von Radarstrahlung und eine Empfangsantennenanordnung zum Empfangen der an Objekten im Umfeld des Straßenfahrzeugs reflektierten Radarstrahlung sowie eine Auswerteeinrichtung umfasst, wobei die Empfangsantennenanordnung sowie die Sendeantennenanordnung jeweils mehrere Antennenstränge aufweisen, wobei jeder Antennenstrang eine Längsrichtung aufweist, entlang der der Antennenstrang eine größere Ausdehnung als quer hierzu aufweist, wobei in jeder der Antennenanordnungen einige der Antennenstränge parallel zueinander angeordnet sind, umfasst die Schritte: Aussenden von Radarstrahlung mittels einer Sendeantennenanordnung, indem die Antennenstränge der Sendeantennenanordnung jeweils mit einem zugeordneten Sendesignal beaufschlagt werden, Empfangen der an einem oder mehreren Objekten im Umfeld des Straßenfahrzeugs reflektierten Radarstrahlung mittels der Empfangsantennenanordnung, wobei an den einzelnen Antennensträngen jeweils zugeordnete Empfangssignale empfangen werden und Auswerten der Empfangssignale, wobei die Empfangssignale der Antennenstränge gegeneinander ausgewertet werden und/oder die Sendesignale relativ zueinander hinsichtlich einer Phasenlage und/oder Amplitude erzeugt werden, so dass beim Auswerten zu dem oder den Objekten, die die Radarstrahlung reflektieren, ein Azimutalwinkel bestimmt wird, wobei das Senden der Radarstrahlung mit einer Sendeantennenanordnung und/oder das Empfangen der reflektierten Radarstrahlung mit einer Empfangsantennenanordnung ausgeführt werden, bei der oder denen zumindest einer der mehreren Antennenstränge gegenüber mindestens einem anderen der Antennenstränge bezüglich der Längsrichtung des mindestens einen anderen Antennenstrangs versetzt ist, und die Empfangssignale der Antennenstränge so gegeneinander auswertet und/oder die Sendesignale relativ zueinander hinsichtlich Phasenlage und/oder Amplitude so erzeugt werden, dass zusätzlich zu dem Azimutalwinkel ein Elevationswinkel zu den Objekten bestimmt wird und anhand einer gegebenenfalls aufgefundenen Abweichung des bestimmten Elevationswinkels von einem vorbekannten Elevationswinkel eines der Objekte relativ zu dem Straßenfahrzeug eine Kalibrationsinformation erzeugt wird.

Vorteil eines solchen Radarsystems bzw. eines solchen Verfahrens liegt darin, dass keine zusätzlich besonders aufwendigen technischen Vorrichtungen benötigt werden, um eine Kalibration des Radarsystems auszuführen. Ferner kann während des Betriebes des Radarsystems jederzeit geprüft werden, ob eine Dejustage, beispielsweise infolge einer Kollision des Straßenfahrzeugs mit einem anderen Objekt, aufgetreten ist. Ferner können die ermittelten Elevationswinkel genutzt werden, um überfahrbare Objekte von anderen Hindernissen zu unterscheiden. Beispielsweise liefern auch Getränkedosen oder Gullydeckel, welche sich auf der Fahrbahn befinden, Radarsignale, die unter Berücksichtigung des Elevationswinkels zuverlässig von anderen Hindernissen wie beispielsweise anderen Fahrzeugen unterschieden werden können. Eine Vielzahl von Fahrzeugsystemen, die Informationen eines Radarsystems in einem Straßenfahrzeug nutzen, können zuverlässiger und präziser sowie komfortabler ausgestaltet werden. Darüber hinaus werden bei der Herstellung des Fahrzeugs deutliche Kosten eingespart. Ferner ist hervorzuheben, dass durch die Messung des Elevationswinkels eine prinzipielle Möglichkeit einer Feinkorrektur möglich wird, welche softwaretechnisch realisiert werden kann, welches zu einer deutlichen Zeitersparnis führt, da in einem solchen Fall eine mechanische Nachkorrektur entfällt. Erfindungsgemäß erfolgt eine rein softwaretechnische Fein- oder Nachkorrektur ohne eine Beeinflussung der Empfindlichkeit der Sensoren je nach Konfiguration, d.h. der konkreten Ausgestaltung, der Antennenanordnung oder Antennenanordnungen in einem Bereich von ±2° bis ±4°. Größere festgestellte Abweichungen sollten jedoch über eine mechanische Nachkorrektur beseitigt werden, wobei Abweichungen von ±1° von der optimal ausgerichteten Einbaustellung nach der Nachkorrektur akzeptabel sind. Treten Abweichungen auf, so wird anhand der Abweichungen eine Kalibrationsinformation ausgegeben, wie eine mechanische Justage zu verändern ist, oder bei nur geringfügigen Abweichungen, wie ein Auswertealgorithmus, der die einzelnen ermittelten Werte bestimmt, über Korrekturparameter eine korrekte Kalibration des Radarsystems herbeiführen kann. Die softwaretechnische Fein- oder Nachkorrektur ermöglicht auch eine verbesserte Möglichkeit der Kontrolle der Gewichtsverteilung im Straßenfahrzeug und insbesondere der Kompensation einer aufgrund der Gesichtsverteilung bewirkten Neigung des Fahrzeugs. Die Feinkorrektur steigert die Genauigkeit mit der eine Verfolgung eines vorausfahrenden Fahrzeugs oder anderer Objekte ausgeführt werden kann (Tracking).

Die einzelnen Antennenstränge sind vorzugsweise als lineare Phased-Array-Antennen ausgebildet, bei denen einzelne Antennenfelder oder so genannte Antennenpatches entlang der Längserstreckungsrichtung angeordnet sind, dass diese mit einem Signal an einer gemeinsamen Zuführleitung beaufschlagt werden können bzw. beim Empfangen von Radarstrahlung an einer einzigen gemeinsamen Zuleitung ein abgreifbares Empfangssignal liefern. Zwischen den einzelnen Antennenpatches eines Strangs können zur Einstellung der Amplituden- und Phasenbelegung der einzelnen Patches zusätzliche Netzwerke eingefügt sein.

Gemäß der Erfindung ist vorgesehen, dass der zumindest eine Antennenstrang und der mindestens eine andere Antennenstrang hinsichtlich ihrer Längsrichtung parallel orientiert sind. Ferner gehören der mindestens eine Antennenstrang und der mindestens eine andere Antennenstrang, welche hinsichtlich der Längserstreckung gegeneinander versetzt sind, beide zu den einigen Antennensträngen, welche hinsichtlich ihrer Längserstreckung parallel orientiert sind, um den Azimutwinkel der eine Reflexion bewirkenden Objekte bezüglich einer Fahrzeugachse bzw. Fahrachse zu ermitteln. Vorteilhaft an einer solchen Ausgestaltung ist es, dass sämtliche Antennenstränge bei einer Azimutalwinkelauswertung nahezu gleichwertig genutzt werden können. Ebensolches gilt, um eine Richtungsabstrahlung in Azimutalrichtung bei einer Sendeantenne zu bewirken.

Gemäß der Erfindung ist außerdem vorgesehen, dass die Antennenstränge einer Gruppe der einigen Antennenstränge (welche parallel zueinander orientiert sind, um den Azimutalwinkel zu reflektierenden Objekten zu ermitteln) jeweils gegenüber den übrigen Antennensträngen derselben Gruppe bezüglich ihrer Längsrichtungen versetzt sind. Durch den Versatz wird bewirkt, dass die einzelnen Antennenpatches bzw. Antennenfelder der Antennenstränge der unterschiedlichen Antennenstränge gegeneinander bezüglich der Längsrichtung der Antennenstränge gegeneinander versetzt sind. Geht man davon aus, dass die einzelnen Antennenstränge identisch oder zumindest gleichartig aufgebaut sind, das bedeutet, dass diese eine gleiche Anzahl von Antennenpatches bzw. Antennenfelder gleicher Dimensionierung und Beabstandung entlang des einzelnen Antennenstrangs aufweisen, so sind die einander entsprechenden Antennenpatches oder Antennenfelder der unterschiedlichen Antennenstränge nicht nur senkrecht zur Längserstreckungsrichtung der Antennenstränge, sondern auch in Längsrichtung der Antennenstränge gegeneinander versetzt. Dieser Versatz ist notwendig, um den Elevationswinkel berechnen zu können. Erfindungsgemäß sind somit die Antennenstränge einer Gruppe der einigen Antennenstränge jeweils gegenüber den übrigen Antennensträngen derselben Gruppe bezüglich ihrer Längsrichtung versetzt. Dies bedeutet, dass alle Antennenstränge der mindestens einen Gruppe jeweils gegenüber den anderen Antennensträngen derselben Gruppe einen Versatz sowohl senkrecht zur Längserstreckungsrichtung als auch parallel zur Längserstreckungsrichtung aufweisen. Somit können einzelne oder unterschiedliche Kombinationen der an den Antennensträngen der einen Gruppe abgegriffenen Empfangssignale für eine Auswertung des Elevationswinkels genutzt werden. Ist eine solche Struktur in der Sendeantenne vorgesehen, so kann der Elevationswinkel der abgestrahlten Strahlung optimal beeinflusst werden.

Um zumindest hinsichtlich einer Raumrichtung, welche parallel zu der Längserstreckung der Antennenstränge gewählt ist, welche für die Bestimmung des Azimutalwinkels vorgesehen sind und senkrecht auf der Messebene stehen, in welcher der Azimutalwinkel bestimmt wird, symmetrische Anordnungen realisieren zu können, die dennoch eine Elevationswinkelbestimmung ermöglicht, ist es erfindungsgemäß vorgesehen, dass die einigen Antennenstränge genau zwei zueinander disjunkte Gruppen von Antennensträngen umfassen, wobei die Antennenstränge der zwei Gruppen entlang einer senkrecht zu der Längsrichtung der Antennenstränge orientierten Queranordnungsrichtung alternierend bezüglich ihrer Gruppenzugehörigkeit beabstandet voneinander angeordnet sind. Innerhalb der Gruppen sind die Antennenstränge jeweils gegenüber den übrigen Antennensträngen derselben Gruppe nicht nur quer zur Längsrichtung, sondern auch parallel zur Längsrichtung gegeneinander versetzt.

Um eine symmetrische Anordnung zu erhalten, sind die Antennenstränge einer jeden der Gruppen bezüglich der Queranordnungsrichtung gleich beabstandet angeordnet. Objekte sind entlang einer Richtung gleich beabstandet angeordnet, wenn entlang einer Strecke, die parallel zu der Richtung orientiert ist, in gleichen Abständen, die an der Strecke abgetragen sind, Objekte angeordnet sind.

Bei einer Ausführungsform sind die einigen Antennenstränge (die zueinander hinsichtlich ihrer Längserstreckung parallel orientiert sind) quer zu ihrer Längserstreckung bzw. Längsrichtung gleich beabstandet angeordnet. Bei einer Antennenanordnung, die genau zwei Gruppen von Antennensträngen aufweist, die alternierend entlang der Queranordnungsrichtung angeordnet sind, weisen die Antennenstränge der einen Gruppe bezogen auf ihre Anordnung entlang der Quererstreckungsrichtung zueinander einen positiven Versatz entlang der Längsrichtung und die Antennenstränge der anderen Gruppe zueinander einen negativen Versatz bezogen auf ihre Anordnung entlang der Querrichtung auf. Assoziiert man beispielsweise mit der Längsrichtung die Y-Achse eines Koordinatensystems und mit der Queranordnungsrichtung eine X-Achse eines kartesischen Koordinatensystems, so ist beispielsweise ein Antennenstrang der ersten Gruppe bezüglich eines auf den Antennensträngen jeweils gleich gewählten Bezugspunkts, beispielsweise einem Mittelpunkt entlang der Längserstreckung, im Ursprung des Koordinatensystems angeordnet. Die übrigen Antennenstränge der ersten und zweiten Gruppe sind gleich beabstandet entlang der X-Achse bei positiven X-Werten angeordnet. Die entlang der X-Richtung benachbart angeordneten Antennenstränge der ersten Gruppe weisen zu dem vorausgehend angeordneten Antennenstrang einen Versatz in positiver Y-Richtung auf. Vorzugsweise sind die Versätze zwischen benachbarten Antennensträngen entlang der Y-Richtung jeweils betragsmäßig gleich. Zwischen jeweils zwei Antennensträngen der ersten Gruppe ist ein Antennenstrang der zweiten Gruppe angeordnet. Ein in positiver X-Richtung benachbarter Antennenstrang der zweiten Gruppe ist gegenüber einem bei einem kleineren X-Wert angeordneten Antennenstrang der zweiten Gruppe in negativer Y-Richtung versetzt. Auch hier sind vorzugsweise die Versätze entlang der Y-Richtung benachbarter Antennenstränge der zweiten Gruppe betragsmäßig gleich groß. Vorzugsweise weisen der erste Antennenstrang (jener dessen Bezugspunkt im Ursprung angeordnet ist) und der letzte in positiver X-Richtung angeordnete Antennenstrang der zweiten Gruppe gegeneinander keinen Versatz in Y-Richtung auf. Hierdurch erhält man eine Antennenanordnung, welche in der Anordnungsebene eine Symmetrieachse aufweist, bezüglich derer eine Spiegelsymmetrie existiert. Die einzelnen Antennen können nun gruppenweise bei der Auswertung zusammengeschaltet werden, um beispielsweise bei einer Empfangsanordnung die Empfangsintensität zu steigern. Eine symmetrische Anordnung bietet den Vorteil, dass bei der Azimutalauswertung durch den Versatz parallel zur Längsrichtung der Antennenstränge verursachte Störungen, bei geeigneter Wahl und/oder Zusammenschaltung bzw. Zusammenfassung der Empfangssignale, symmetrisch in die Auswertung eingehen und deren Einfluss vollständig kompensiert oder zumindest minimiert werden können.

Bei einer anderen nicht beanspruchten Ausführungsform ist vorgesehen, dass der zumindest eine Antennenstrang senkrecht zu dem mindestens einen anderen Antennenstrang oder senkrecht zu einer Vielzahl der Antennenstränge, die den mindestens einen Antennenstrang umfassen, orientiert ist, wobei die Vielzahl der Antennenstränge hinsichtlich ihrer Längsrichtungen parallel orientiert ist und gleich beabstandet bezüglich einer Richtung senkrecht zu ihren Längsrichtungen angeordnet ist. Diese sind vorzugsweise nicht entlang der Längsrichtung zueinander versetzt. Bei einer solchen Ausgestaltung können ein oder mehrere Antennenstränge oberhalb und/oder unterhalb einer ansonsten gleichmäßig ausgebildeten Antennenanordnung mit mehreren zueinander gleich beabstandeten parallel ausgerichteten Antennensträngen angeordnet werden.

Nachfolgend wird die Erfindung unter Bezugnahme auf bevorzugte Ausführungsformen näher erläutert. Hierbei zeigen:
- Fig. 1: eine schematische Seitenansicht auf ein Kraftfahrzeug;
- Fig. 2: eine schematische Draufsicht eines Kraftfahrzeugs;
- Fig. 3: eine schematische Darstellung zur Erläuterung einer Winkelbestimmung anhand von zwei Empfangssignalen;
- Fig. 4: eine schematische Darstellung einer Sendeantennenanordnung sowie einer Empfangsantennenanordnung nach einer ersten Ausführungsform; und
- Fig. 5: eine Sendeantennenanordnung sowie einer Empfangsantennenanordnung nach einer zweiten nicht beanspruchten Ausführungsform.

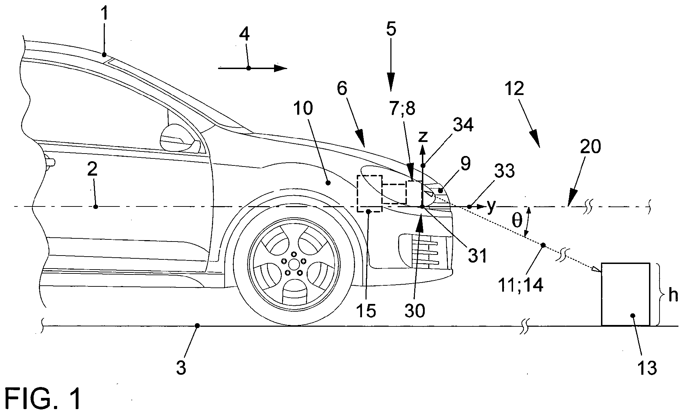

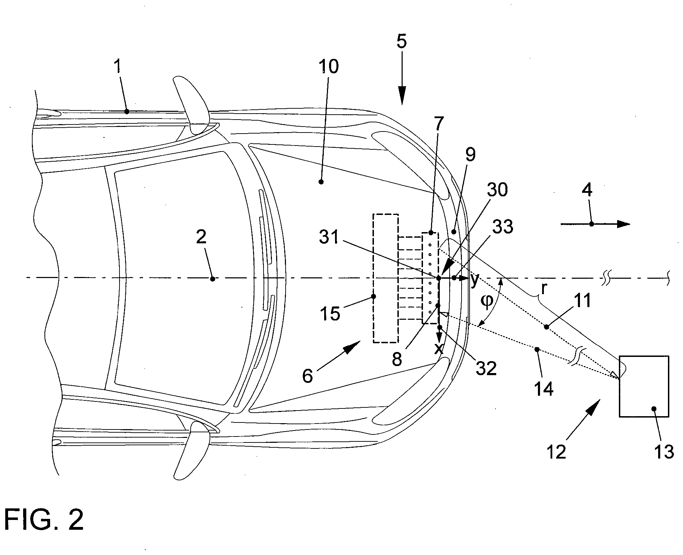

In Fig. 1 ist schematisch ein Straßenfahrzeug 1, hierein Personenkraftfahrzeug, in Seitenansicht dargestellt. In Fig. 2 ist das in Fig. 1 dargestellte Fahrzeug in Draufsicht dargestellt. Mit dem Straßenfahrzeug 1 ist eine Fahrzeugachse 2 verknüpft, welche auch als Fahrachse bezeichnet wird. Die Fahrzeugachse 2 ist bei dem in Ruhe befindlichen Straßenfahrzeug 1 parallel zu einer ebenen Fläche 3, auf der das Straßenfahrzeug 2 steht. Die Fahrzeugachse 2 stellt eine Längsachse des Straßenfahrzeugs 1 dar. Bei Geradeausfahrt des Straßenfahrzeugs 1 ist ein die Geradeausfahrt beschreibender Bewegungsvektor 4 kollinear zu der Fahrzeugachse 2 orientiert. In einem vorderen Bereich 5 ist ein Radarsystem 6 angeordnet, dessen Komponenten hier nur mittels gestrichelter Linien schematisch angedeutet sind, da diese von außen in den dargestellten Ansichten nicht sichtbar sind.

Das Radarsystem 6 umfasst in der Regel eine Sendeantennenanordnung 7 sowie eine Empfangsantennenanordnung 8, die beispielsweise hinter einem Kühlergrill 9 im Innern des Motorraums 10 angeordnet sind. Die Sendeantennenanordnung 7 wird genutzt, um Radarstrahlung 11 in das Umfeld 12 vor dem Straßenfahrzeug 1 auszusenden. An einem in dem Umfeld 12 befindlichen Objekt 13 wird ein Teil der ausgesandten Radarstrahlung 11 zu dem Straßenfahrzeug 1 rückreflektiert und trifft als reflektierte Radarstrahlung 14 auf die Empfangsantennenanordnung 8. Anhand der Laufzeit kann eine Entfernung des Objekts 13 von dem Straßenfahrzeug 1 ermittelt werden. Darüber hinaus ist es möglich, den Azimutwinkel ϕ der reflektierten Radarstrahlung 14 bezüglich der Fahrzeugachse 2 in einer Azimutalmessebene 20 zu ermitteln, welche parallel zu der Fläche 3 bzw. Fahrebene ist. Neben der Position in der Fahrebene bzw. Fläche 3, welche durch den Abstand r und den Azimutwinkel ϕ festgelegt ist, ist darüber hinaus eine Höhe h des Objekts 13 bzw. dessen Ausdehnung senkrecht zur Fahrebene 3 von Interesse, um beispielsweise festzustellen, ob das Objekt 13 gegebenenfalls aufgrund einer geringen Höhe überfahren werden kann oder sogar beispielsweise, wenn dieses eine Unterkante einer Brücke ist, unterfahren werden kann. Daher wird erfindungsgemäß zusätzlich zu dem Azimutalwinkel ϕ der Elevationswinkel θ der zurückreflektierten Radarstrahlung 14 bezüglich der Fahrzeugachse 2 ermittelt. Sind die relative Position und Ausdehnung des Objekts 13 relativ zu dem Straßenfahrzeug 1 bekannt, beispielsweise dessen Abstand r, dessen Höhe h oder gegebenenfalls dessen Ausdehnung in Azimutalwinkelrichtung bzw. Elevationswinkelrichtung, so kann aus der Vermessung der erfassten reflektierten Radarstrahlung 14 ermittelt werden, ob die gemessenen Werte mit den tatsächlichen vorbekannten Werten übereinstimmen. Ist dies der Fall, so sind die Sende- und Empfangsantennenanordnung in dem Straßenfahrzeug 1 korrekt kalibriert. Treten hingegen Abweichungen auf, so kann anhand der Abweichungen eine Kalibrationsinformation ausgegeben werden, wie beispielsweise eine mechanische Justage zu verändern ist, oder bei nur geringfügigen Abweichungen, wie ein Auswertealgorithmus, der die einzelnen ermittelten Werte bestimmt, über Korrekturparameter eine korrekte Kalibration des Radarsystems herbeiführen kann. Die beschriebene Auswertung erfolgt in einer Auswerteeinrichtung 15.

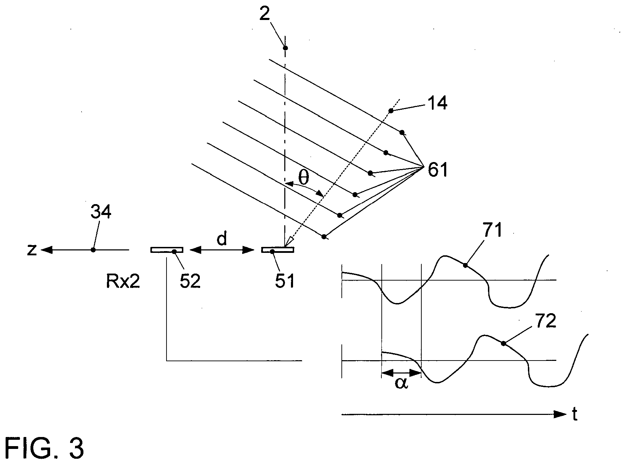

In Fig. 3 wird exemplarisch dargestellt, wie ein Winkel bezüglich der Fahrzeugachse 2 für die reflektierte Strahlung 14 ermittelt werden kann. Beispielhaft ist dies für den Elevationswinkel θ dargestellt, wobei die Bestimmung des Azimutalwinkels ϕ in analoger Weise vorgenommen werden kann. Für die weitere Beschreibung wird davon ausgegangen, dass mit dem Straßenfahrzeug 1 nach Fig. 1 und 2 ein kartesisches Koordinatensystem 30 verknüpft ist, welches sich mit dem Straßenfahrzeug mitbewegt. Der Y-Achsen-Einheitsvektor ist kollinear mit der Fahrzeugachse ausgerichtet und weist in die Vorwärtsfahrtrichtung des Straßenfahrzeugs 1. Die Z-Richtung weist senkrecht aus der Zeichnungsebene auf den Betrachter zu und die X-Richtung und der X-Achsenvektor nach rechts. Als Ursprung 31 wird ein Punkt mittig zwischen der Sendeantennenanordnung 7 und der Empfangsantennenanordnung 8 an dessen unterem Rand festgelegt. Es versteht sich, dass die Definition dieses Koordinatensystems beliebig gewählt werden kann. Das hier gewählte Koordinatensystem ist jedoch günstig für die folgende Beschreibung.

In Fig. 3 sind zwei Antennenelemente bzw. Antennenstränge 51, 52 schematisch dargestellt, die entlang der Z-Achse, wie sie in Bezug auf Fig. 1 und 2 festgelegt ist, um einen Abstand d gegeneinander versetzt sind. Die reflektierte Radarstrahlung 14 ist schematisch zusätzlich durch zueinander parallel verlaufende Linien 61 dargestellt. Diese deuten beispielsweise Nulldurchgänge der Phasenlage der elektromagnetischen Wellen der reflektierten Radarstrahlung 14 schematisch an. Die Ausbreitungsrichtung der reflektierten Radarstrahlung 14 ist senkrecht zu den Linien 61 orientiert. Wie aus Fig. 3 zu ersehen ist, erreicht die reflektierte Radarstrahlung zunächst den mit dem Bezugszeichen 51 versehenen Antennenstrang Rx1 und zeitlich darauf folgend den mit dem Bezugszeichen 52 versehenen Antennenstrang Rx2. In Fig. 3 sind die an den Antennensträngen 51, 52 erfassten Empfangssignale 71, 72 schematisch gegen die Zeit t aufgetragen. Gut zu erkennen ist, dass die beiden Empfangssignale 71 und 72 einander gleichen bzw. stark ähneln, jedoch einen Phasenversatz α aufweisen. Über geometrische Überlegungen lässt sich aus diesem Phasenversatz der Elevationswinkel θ eindeutig bestimmen, sofern der Abstand d zwischen den Antennensträngen kleiner als die Wellenlänge der Radarstrahlung ist.

Analog lässt sich der Azimutalwinkel ϕ bestimmen, sofern die Antennenstränge, welche zu dessen Ermittlung herangezogen werden, einen Versatz bezüglich der X-Richtung aufweisen, also bezüglich der Achse, welche senkrecht auf der Fahrzeugachse steht und mit der Fahrzeugachse gemeinsam die Azimutalmessebene 20 aufspannt.

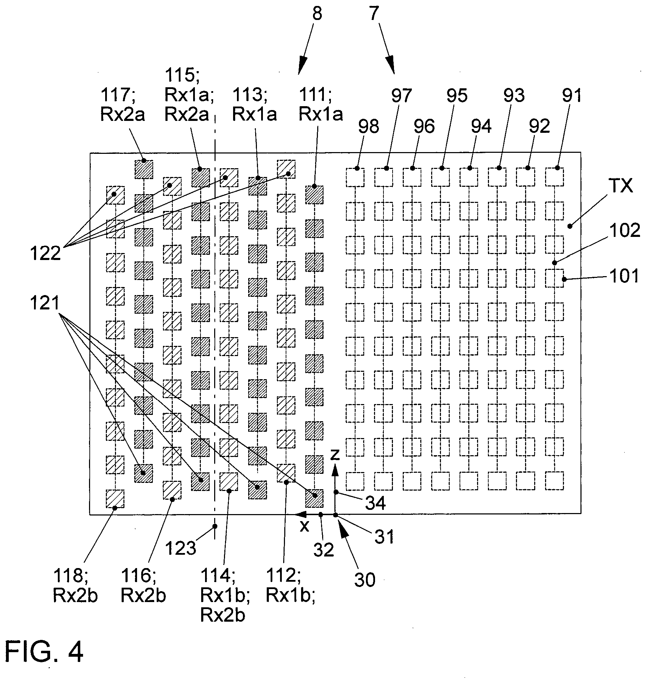

In Fig. 4 ist eine beispielhafte bevorzugte Ausführungsform einer Sendeantennenanordnung 7 sowie einer Empfangsantennenanordnung 8 dargestellt. Dargestellt sind nebeneinander angeordnet eine Empfangsantennenanordnung 8 und eine Sendeantennenanordnung 7. Um die Beschreibung zu erleichtern, wird mit den Anordnungen ein kartesisches Koordinatensystem assoziiert, dessen Ursprung hier willkürlich am unteren Rand der Anordnung mittig zwischen der Sendeantennenanordnung 7 und der Empfangsantennenanordnung 8 festgelegt. Die X-Richtung 32 weist nach links und die Z-Richtung 34 nach oben. Die Y-Richtung weist entsprechend aus der Zeichnungsebene auf den Betrachter zu. Dieses Koordinatensystem korrespondiert mit dem in den Fig. 1 und 2 dargestellten Koordinatensystem.

In der dargestellten Ausführungsform umfasst die Sendeantennenanordnung acht Antennenstränge 91-98, welche jeweils eine Längsrichtung aufweisen, die parallel zur Z-Achse orientiert ist. Jeder der Antennenstränge 91-98 umfasst zehn Antennenfelder bzw. Antennenpatches 101, welche, wie über die gestrichelt eingezeichneten Linien 102 angedeutet ist, miteinander verschaltet sind und mit einem Sendesignal beaufschlagt werden, um Radarstrahlung auszusenden. Über die unterschiedliche Beaufschlagung der Antennenstränge 91-98 ist es möglich, bei geeigneter Phasen- und Amplitudenwahl der einzelnen Sendesignale eine Abstrahlrichtung in der X-Y-Ebene, also in der Azimutalwinkelebene, festzulegen und zu variieren.

Die Empfangsantennenanordnung 8 umfasst ebenfalls acht Antennenstränge 111-118, welche entlang der X-Richtung ebenso wie die Antennenstränge 91-98 der Sendeantennenanordnung 7 gleich beabstandet voneinander angeordnet sind, Hinsichtlich ihrer Längsrichtung bzw. Längserstreckung sind diese parallel zur Z-Achse und somit auch jeweils zueinander parallel orientiert. Die Antennenstränge 111-118 der Empfangsantennenanordnung 8 lassen sich jedoch in zwei Gruppen 121, 122 von Antennensträngen 111-118 zusammenfassen, wie es auch über die unterschiedlichen Schraffuren der Antennenpatches 101 angedeutet ist. Innerhalb der jeweiligen Gruppe sind die Antennenpatches jeweils bezüglich der Y-Richtung 32 gleich beabstandet. Die Antennenstränge der ersten Gruppe 111, 113, 115, 117 sind alternierend mit den Antennensträngen 112, 114, 116, 118 der zweiten Gruppe 122 entlang der X-Achse äquidistant beabstandet angeordnet. Während die Antennenstränge 111, 113, 115, 117 betrachtet entlang der X-Richtung jeweils gegenüber dem vorausgehend angeordneten Antennenstrang derselben Gruppe 121 einen Versatz in positivere Z-Richtung aufweisen, weisen die Antennenstränge 112, 114, 116, 118 der zweiten Gruppe 122 von Antennensträngen betrachtet entlang der X-Richtung jeweils einen negativen Versatz gegenüber dem vorausgehend angeordneten Antennenstrang derselben Gruppe 122 auf. Insgesamt ist die Antennenanordnung so gewählt, dass der erste Antennenstrang der ersten Gruppe 111 bezüglich der Z-Achse genauso angeordnet ist wie der letzte Antennenstrang 118 der zweiten Gruppe 122 von Antennensträngen. Hierdurch ergibt sich eine spiegelsymmetrische Anordnung der Antennenstränge 111-118 bezüglich einer Symmetrieachse 123, welche in der X-Z-Ebene liegt und parallel zur Z-Achse orientiert ist. Aufgrund der Tatsache, dass zumindest einzelne der Antennenstränge parallel zu ihrer Längserstreckung relativ zueinander, d.h. bezüglich der Z-Achse, versetzt sind, ist es möglich, die an den einzelnen Antennensträngen 111-118 abgegriffenen Empfangssignale so gegeneinander auszuwerten, dass hieraus der Elevationswinkel bestimmt werden kann. Ebenso ist es aufgrund des Versatzes entlang der X-Achse möglich, den Azimutalwinkel aus den Empfangssignalen der einzelnen Empfangsantennenstränge 111-118 abzuleiten.

Um eine Zielerkennungsleistung (in Form von Reichweite, Reflektivität) zu steigern, muss das Signal-zu-Rauschverhältnis verbessert werden. Dazu werden beispielsweise bei einer Ausführungsform, wie angedeutet, jeweils drei Antennenstränge zu "virtuellen" Antennensträngen R×1a, Rx2a sowie R×1b und Rx2b zusammengefasst. Die symmetrische Anordnung ermöglicht es, Störungen (wie z. B. Rauschen), welche durch den Versatz der einzelnen Antennenstränge 111-118 entlang der Z-Richtung entstehen, weitestgehend zu kompensieren. Durch den symmetrischen Aufbau lassen sich Korrekturen für die jeweiligen in allen Antennensträngen detektierten Ziele errechnen. Treten Störungen aufgrund der Ausbreitungssituation auf, so sind diese in den einzelnen Antennensträngen unterschiedlich und können zumindest teilweise korrigiert werden. Die dargestellte Anordnung der Empfangsantennenanordnung 8 ermöglicht eine Elevationswinkelbestimmung, ohne für die Antennenordnung einen wesentlich größeren Bauraum zu benötigen. Darüber hinaus müssen die Auswertealgorithmen zur Bestimmung des Azimutalwinkels nur unwesentlich angepasst werden. Eine Auflösung hinsichtlich der Bestimmung des Azimutalwinkels wird ebenfalls nicht oder nur unwesentlich beeinflusst.

Es versteht sich für den Fachmann, dass aufgrund der Umkehrbarkeit der die Strahlungsausbreitung bestimmenden Gleichungen der elektromagnetischen Wellen ebenso möglich wäre, die Elevations- und Azimutalwinkelbestimmung auszuführen, wenn lediglich die Sendeantenne in der Weise modifiziert würde, wie dies für die Empfangsantenne dargestellt ist. Die Empfangsantenne könnte dann der Sendeantennenanordnung, wie sie in Fig. 4 dargestellt ist, entsprechen. Ebenso sind Ausführungsformen denkbar, bei denen beide Antennenanordnungen Antennenstränge aufweisen, die bezüglich der Z-Richtung und der X-Richtung einen Versatz aufweisen.

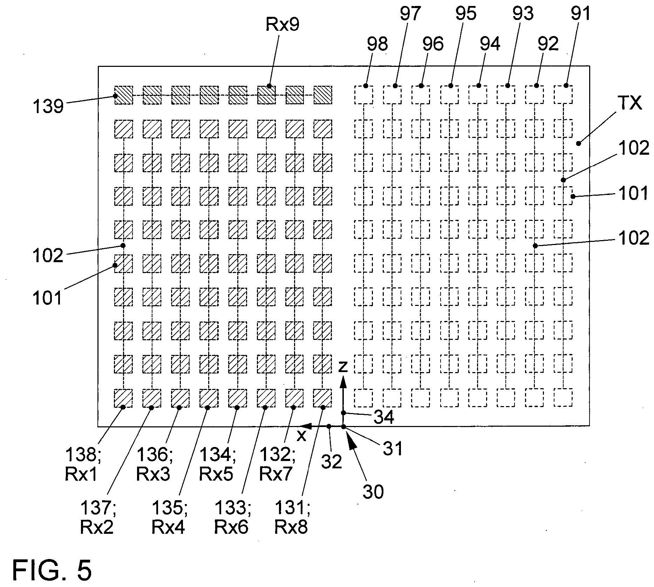

In Fig. 5 ist eine weitere Ausführungsform gezeigt. Bei dieser unterscheidet sich die Empfangsantennenanordnung 8 von der Sendeantennenanordnung 7 lediglich dadurch, dass quer zu den mit ihrer Längsrichtung parallel zur Z-Achse ausgerichteten Antennensträngen 131-138 der Empfangsantennenanordnung 7 ein zusätzlicher Antennenstrang 139 senkrecht hierzu orientiert am oberen Rand der Empfangsantennenanordnung 7 angeordnet ist. Bei einer solchen Ausführungsform wird die Azimutalwinkelbestimmung gegenüber bestehenden Systemen nicht verändert, jedoch die zusätzliche Möglichkeit zur Elevationswinkelbestimmung geschaffen.

Es versteht sich für den Fachmann, dass weitere Ausgestaltungen der Empfangsantennen- und/oder Sendeantennenanordnung möglich sind. Beispielsweise könnte eine Ausführungsform vorsehen, dass die parallel zueinander orientierten Antennenstränge, welche äquidistant beispielsweise entlang der X-Richtung voneinander beabstandet sind, jeweils zum vorausgehend angeordneten Antennenstrang einen festgelegten Versatz, beispielsweise in positiver Z-Richtung, aufweisen.

Der Versatz der Antennenstränge entlang der Z-Richtung ist vorzugsweise so gewählt, dass dieser kleiner als die Wellenlänge der Radarstrahlung ist, die von dem Radarsystem ausgesandt bzw. empfangen wird.

Die in der Figurenbeschreibung genannten Merkmale können in beliebiger Kombination zur Umsetzung der Erfindung genutzt werden.

### Bezugszeichenliste

- 1: Straßenfahrzeug
- 2: Fahrzeugachse
- 3: Fläche/Fahrebene
- 4: Bewegungsvektor (Geradeausfahrt)
- 5: vorderer Bereich
- 6: Radarsystem
- 7: Sendeantennenanordnung
- 8: Empfangsantennenanordnung
- 9: Kühlergrill
- 10: Motorraum
- 11: Radarstrahlung (ausgesandt)
- 12: Umfeld
- 13: Objekt
- 14: reflektierte Radarstrahlung
- 15: Auswerteeinrichtung
- ϕ: Azimutalwinkel
- 20: Azimutalmessebene
- r: Abstand
- h: Höhe
- θ: Elevationswinkel
- 30: Koordinatensystem
- 31: Ursprung
- 32: X-Achse
- 33: Y-Achse
- 34: Z-Achse
- 51: Antennenstrang
- 52: Antennenstrang
- d: Abstand
- 61: Linie
- 71, 72: Empfangssignale
- 91-98: Antennenstränge (Sendeantennenanordnung)
- 111-118: Antennenstränge (Empfangsantennenanordnung)
- 121: erste Gruppe
- 122: zweite Gruppe
- 123: Symmetrieachse
- 131-138: Antennenstränge (Empfangsantennenanordnung)
- 139: Antennenstrang

## Patentansprüche

1. Verfahren zum Kalibrieren eines Radarsystems (6) eines Straßenfahrzeugs (1), wobei das Radarsystem (6) eine Sendeantennenanordnung (7) zum Aussenden von Radarstrahlung (11) und eine Empfangsantennenanordnung (8) zum Empfangen der an Objekten (13) im Umfeld (12) des Straßenfahrzeugs (1) reflektierten Radarstrahlung (14) sowie
eine Auswerteeinrichtung (15) umfasst, wobei die Empfangsantennenanordnung (8) und die Sendeantennenanordnung (7) jeweils mehrere Antennenstränge (91-98, 111-118, 131-139) aufweisen, wobei jeder Antennenstrang (91-98, 111-118, 131-139) eine Längsrichtung aufweist, entlang der der Antennenstrang (91-98, 111-118, 131-139) eine größere Ausdehnung als quer hierzu aufweist,
wobei in jeder der Antennenanordnungen (7, 8) einige der Antennenstränge (91-98, 111-118, 131-138) parallel zueinander angeordnet sind und quer zu der jeweiligen Längsrichtung voneinander beabstandet sind, wobei das Verfahren die Schritte umfasst:
Aussenden von Radarstrahlung (11) mittels der Sendeantennenanordnung (7), indem die Antennenstränge (91-98) der Sendantennenanordnung (7) jeweils mit einem zugeordneten Sendesignal beaufschlagt werden,
Empfangen der an einem oder mehreren Objekten (13) im Umfeld (12) des Straßenfahrzeugs (1) reflektierten Radarstrahlung (14) mittels der Empfangsantennenanordnung (8),
wobei an den einzelnen Antennensträngen (111-118, 131-139) jeweils zugeordnete Empfangssignale empfangen werden und
Auswerten der Empfangssignale, wobei die Empfangssignale der Antennenstränge gegeneinander ausgewertet werden und/oder die Sendesignale relativ zueinander hinsichtlich Phasenlage und/oder Amplitude erzeugt werden, so dass beim Auswerten zu dem oder den Objekten (13), die die Radarstrahlung (11) reflektieren, ein Azimutalwinkel (ϕ) bestimmt wird,
**dadurch gekennzeichnet, dass**
das Senden der Radarstrahlung (11) mit der Sendeantennenanordnung (7) und/oder das Empfangen der reflektierten Radarstrahlung (14) mit der Empfangsantennenanordnung (8) ausgeführt werden, bei denen zumindest einer der mehreren Antennenstränge (111-118, 131-139) gegenüber mindestens einem anderen der Antennenstränge (111-118, 131-139) bezüglich der Längsrichtung des mindestens einen anderen Antennenstrangs versetzt ist und ferner die Empfangssignale der Antennenstränge (111-118, 131-139) gegeneinander so ausgewertet und/oder die Sendesignale relativ zueinander hinsichtlich Phasenlage und/oder Amplitude so erzeugt werden, dass zusätzlich zu dem Azimutalwinkel (ϕ) ein Elevationswinkel (θ) zu den Objekten (13) bestimmt wird und anhand einer gegebenenfalls vorhandenen Abweichung des bestimmten Elevationswinkels (θ) von einem vorbekannten Elevationswinkel eines der Objekte (13) relativ zu dem Straßenfahrzeug (1) eine Kalibrationsinformation erzeugt wird, wobei mittels der Kalibrationsinformation bei der vorhandenen Abweichung des bestimmten Elevationswinkels (θ) von dem vorbekannten Elevationswinkel des einen der Objekte (13) relativ zu dem Straßenfahrzeug (1) eine rein softwaretechnische Nachkorrektur ohne eine Beeinflussung der Empfindlichkeit der Sensoren je nach Konfiguration der Antennenanordnung oder Antennenanordnungen in einem Bereich von ±2° bis ±4° des Elevationswinkels (θ) erfolgt und die Kalibrationsinformation Angaben umfasst, wie eine mechanische Nachkorrektur in Form einer mechanischen Justage der Sendeantennenanordnung (7) und der Empfangsantennenanordnung (8) zu verändern ist, wenn die festgestellte Abweichung des bestimmten Elevationswinkels (θ) von dem vorbekannten Elevationswinkel des einen der Objekte (13) relativ zu dem Straßenfahrzeug (1) größer als der Bereich von ±2° bis ±4° ist,
wobei das Senden der Radarstrahlung (11) mit der Sendeantennenanordnung (7) und/oder das Empfangen der reflektierten Radarstrahlung (14) mit der Empfangsantennenanordnung (8) ausgeführt werden, bei denen der zumindest eine Antennenstrang (91-98, 111-118, 131-138) und der mindestens eine andere Antennenstrang hinsichtlich ihrer Längsrichtungen parallel orientiert sind und wobei bei einer der Antennenanordnungen (7; 8) die einigen Antennenstränge genau zwei zueinander disjunkte Gruppen von zueinander parallelen Antennensträngen umfassen,
wobei die Antennenstränge der genau zwei Gruppen entlang einer senkrecht zu der Längsrichtung der Antennenstränge orientierten Queranordnungsrichtung, die parallel zur Fahrebene orientiert ist, alternierend bezüglich ihrer Gruppenzugehörigkeit beabstandet voneinander angeordnet sind und innerhalb der genau zwei Gruppen die Antennenstränge jeweils gegenüber den übrigen Antennensträngen derselben Gruppe nicht nur quer zur Längsrichtung, sondern auch parallel zur Längsrichtung gegeneinander versetzt sind.

2. Verfahren nach Anspruch1, **dadurch gekennzeichnet, dass** das Senden der Radarstrahlung (11) mit der Sendeantennenanordnung (7) und/oder das Empfangen der reflektierten Radarstrahlung (14) mit der Empfangsantennenanordnung (8) ausgeführt werden, bei denen der geringste Versatz bezüglich der Längsrichtungen der Antennenstränge (111, 113, 115, 117) derselben Gruppe (124) kleiner als eine Wellenlänge der Radarstrahlung ist, für deren Abstrahlung oder Empfang die entsprechende Antennenanordnung optimiert ist oder verwendet wird.

3. Verfahren nach einem der vorangehenden Ansprüche, **dadurch gekennzeichnet, dass** die Antennenstränge (111-118) einer jeden der genau zwei Gruppen (121, 122) jeweils bezüglich der Querorientierungsrichtung gleich beabstandet sind.

4. Verfahren nach einem der vorangehenden Ansprüche, **dadurch gekennzeichnet, dass** die Antennenstränge der einen der genau zwei Gruppen bezogen auf ihre Anordnung entlang der Queranordnungsrichtung zueinander einen positiven Versatz entlang der Längsrichtung und die Antennenstränge der anderen der genau zwei Gruppen zueinander einen negativen Versatz bezogen auf ihre Anordnung entlang der Queranordnungsrichtung aufweisen.

5. Verfahren nach einem der Ansprüche 1 oder 2, **dadurch gekennzeichnet, dass** das Senden der Radarstrahlung (11) mit einer Sendeantennenanordnung (7) und/oder das Empfangen der reflektierten Radarstrahlung (14) mit der Empfangsantennenanordnung (8) ausgeführt werden, bei denen die einigen der Antennenstränge (111-118) quer zu ihren Längserstreckungen gleich beabstandet angeordnet sind.

6. Verfahren nach einem der vorangehenden Ansprüche, **dadurch gekennzeichnet, dass** das Senden der Radarstrahlung (11) mit einer Sendeantennenanordnung (7) und/oder das Empfangen der reflektierten Radarstrahlung (14) mit der Empfangsantennenanordnung (8) ausgeführt werden, bei denen die Antennenstränge einer der Antennenanordnungen in einer Ebene angeordnet sind und die entsprechende Antennenanordnung bezüglich einer Symmetrieachse (13), welche in der Ebene liegt, eine Spiegelsymmetrie aufweist.

## Claims

1. Method for calibrating a radar system (6) of a road vehicle (1),
wherein the radar system (6) comprises a transmitting antenna arrangement (7) for transmitting radar radiation (11) and a receiving antenna arrangement (8) for receiving the radar radiation (14) reflected at objects (13) in the vicinity (12) of the road vehicle (1), and an evaluation device (15), wherein the receiving antenna arrangement (8) and the transmitting antenna arrangement (7) each have a plurality of antenna strands (91-98, 111-118, 131-139), wherein each antenna strand (91-98, 111-118, 131-139) has a longitudinal direction, along which the antenna strand (91-98, 111-118, 131-139) has a greater extent than transversely thereto,
wherein in each of the antenna arrangements (7, 8) some of the antenna strands (91-98, 111-118, 131-138) are arranged parallel to one another and are spaced apart transversely to the respective longitudinal direction, wherein the method comprises the steps of:
transmitting radar radiation (11) by means of the transmitting antenna arrangement (7) by applying a transmission signal that is assigned in each case to the antenna strands (91-98) of the transmitting antenna arrangement (7),
receiving the radar radiation (14) reflected at one or more objects (13) in the vicinity (12) of the road vehicle (1), by means of the receiving antenna arrangement (8), wherein respectively assigned reception signals are received at the individual antenna strands (111-118, 131-139), and
evaluating the reception signals, wherein the reception signals of the antenna strands are evaluated against one another and/or the transmission signals are generated relative to one another with respect to phase position and/or amplitude, with the result that an azimuth angle (ϕ) with respect to the object or objects (13) reflecting the radar radiation (11) is determined during the evaluation,
**characterized in that**
the transmission of the radar radiation (11) is effected with the transmitting antenna arrangement (7) and/or the reception of the reflected radar radiation (14) is effected with the receiving antenna arrangement (8), in which at least one of the plurality of antenna strands (111-118, 131-139) is offset from at least one other of the antenna strands (111-118, 131-139) with respect to the longitudinal direction of the at least one other antenna strand and furthermore the reception signals of the antenna strands (111-118, 131-139) are evaluated against one another and/or the transmission signals are generated relative to one another with respect to phase position and/or amplitude in a manner such that, in addition to the azimuth angle (ϕ), an elevation angle (θ) with respect to the objects (13) is determined and a piece of calibration information is generated on the basis of any deviation of the determined elevation angle (θ) which may be present from a previously known elevation angle of one of the objects (13) relative to the road vehicle (1), wherein in the presence of the deviation of the determined elevation angle (θ) from the previously known elevation angle of the one of the objects (13) relative to the road vehicle (1), purely software-based post-correction takes place by means of the piece of calibration information without any influencing of the sensitivity of the sensors depending on the configuration of the antenna arrangement or antenna arrangements in a range from ±2° to ±4° of the elevation angle (θ) and the piece of calibration information comprises details as to how a mechanical post-correction in the form of a mechanical adjustment of the transmitting antenna arrangement (7) and of the receiving antenna arrangement (8) should be changed if the ascertained deviation of the determined elevation angle (θ) from the previously known elevation angle of the one of the objects (13) relative to the road vehicle (1) is greater than the range from ±2° to ±4°,
wherein the transmission of the radar radiation (11) is effected with the transmitting antenna arrangement (7) and/or the reception of the reflected radar radiation (14) is effected with the receiving antenna arrangement (8), in which the at least one antenna strand (91-98, 111-118, 131-138) and the at least one other antenna strand are oriented parallel with respect to their longitudinal directions and wherein, in one of the antenna arrangements (7; 8), the some antenna strands comprise exactly two mutually disjoint groups of antenna strands that are parallel to one another,
wherein the antenna strands of the exactly two groups are arranged spaced apart from one another along a transverse arrangement direction, which is oriented perpendicularly to the longitudinal direction of the antenna strands and is oriented parallel to the driving plane, so as to alternate with respect to their group association and, within the exactly two groups, the antenna strands are offset in each case from the remaining antenna strands of the same group not only transversely to the longitudinal direction but also parallel to the longitudinal direction with respect to one another.

2. Method according to Claim 1, **characterized in that** the transmission of the radar radiation (11) is effected with the transmitting antenna arrangement (7) and/or the reception of the reflected radar radiation (14) is effected with the receiving antenna arrangement (8), in which the smallest offset with respect to the longitudinal directions of the antenna strands (111, 113, 115, 117) of the same group (124) is smaller than a wavelength of the radar radiation, for whose emission or reception the corresponding antenna arrangement is optimized or used.

3. Method according to either of the preceding claims, **characterized in that** the antenna strands (111-118) of each of the exactly two groups (121, 122) are in each case equally spaced apart with respect to the transverse orientation direction.

4. Method according to one of the preceding claims, **characterized in that** the antenna strands of the one of the exactly two groups have, with respect to their arrangement along the transverse arrangement direction, a positive offset from one another along the longitudinal direction and the antenna strands of the other one of the exactly two groups has, with respect to their arrangement along the transverse arrangement direction, a negative offset from one another.

5. Method according to either of Claims 1 and 2, **characterized in that** the transmission of the radar radiation (11) is effected with a transmitting antenna arrangement (7) and/or the reception of the reflected radar radiation (14) is effected with the receiving antenna arrangement (8), in which the some of the antenna strands (111-118) are arranged equally spaced apart transversely to their longitudinal extents.

6. Method according to one of the preceding claims, **characterized in that** the transmission of the radar radiation (11) is effected with a transmitting antenna arrangement (7) and/or the reception of the reflected radar radiation (14) is effected with the receiving antenna arrangement (8), in which the antenna strands of one of the antenna arrangements are arranged in one plane and the corresponding antenna arrangement has mirror symmetry with respect to an axis of symmetry (13) located in the plane.

## Revendications

1. Procédé d'étalonnage d'un système radar (6) d'un véhicule routier (1),
le système radar (6) comprenant un ensemble formant antenne d'émission (7) destiné à émettre un rayonnement radar (11) et un ensemble formant antenne de réception (8) destiné à recevoir le rayonnement radar (14) réfléchi par des objets (13) situé dans l'environnement (12) du véhicule routier (1) et
un dispositif d'évaluation (15), l'ensemble formant antenne de réception (8) et l'ensemble formant antenne d'émission (7) comportant chacun une pluralité de brins d'antenne (91-98, 111-118, 131-139), chaque brin d'antenne (91-98, 111-118, 131-139) ayant une direction longitudinale le long de laquelle le brin d'antenne (91-98, 111-118, 131-139) présente une plus grande extension que dans la direction transversale,
dans chacun des ensembles formant antennes (7, 8), quelques brins d'antenne (91-98, 111-118, 131-138) étant disposés parallèlement les uns aux autres et étant espacés les uns des autres transversalement à la direction longitudinale respective, le procédé comprenant les étapes suivantes :
émettre un rayonnement radar (11) au moyen de l'ensemble formant antenne d'émission (7) pendant que les brins d'antenne (91-98) de l'ensemble formant antenne d'émission (7) reçoivent chacun un signal d'émission associé,
recevoir le rayonnement radar (14), réfléchi par un ou plusieurs objets (13) situés dans l'environnement (12) du véhicule routier (1), à l'aide de l'ensemble formant antenne de réception (8),
des signaux de réception associés étant reçus par les brins d'antenne individuels (111-118, 131-139) et évaluer les signaux de réception, les signaux de réception des brins d'antenne étant évalués les uns par rapport aux autres et/ou les signaux d'émission étant générés les uns par rapport aux autres en termes de position de phase et/ou d'amplitude de façon à déterminer un angle d'azimut (ϕ) lors de l'évaluation de l'objet ou des objets (13) qui réfléchissent le rayonnement radar (11),
**caractérisé en ce que**
l'émission du rayonnement radar (11) est réalisée avec l'ensemble formant antenne d'émission (7) et/ou la réception du rayonnement radar réfléchi (14) est réalisée avec l'ensemble formant antenne de réception (8), émission et réception lors desquelles l'un au moins de la pluralité de brins d'antenne (111-118, 131-139) est décalé d'au moins un autre des brins d'antenne (111-118, 131-139) dans la direction longitudinale de l'au moins un autre brin d'antenne et en outre les signaux de réception des brins d'antenne (111-118, 131-139) sont évalués les uns par rapport aux autres et/ou les signaux d'émission sont générés les uns par rapport aux autres en termes de position de phase et/ou d'amplitude de façon à déterminer, en plus de l'angle d'azimut (ϕ), un angle d'élévation (θ) par rapport aux objets (13) et à générer une information d'étalonnage sur la base d'un écart éventuellement présent de l'angle d'élévation déterminé (θ) par rapport à un angle d'élévation déjà connu de l'un des objets (13) par rapport au véhicule routier (1), une correction purement logicielle étant effectuée à l'aide de l'information d'étalonnage, en présence d'un écart de l'angle d'élévation déterminé (θ) par rapport à l'angle d'élévation déjà connu de l'un des objets (13) par rapport au véhicule routier (1), en fonction de la configuration de l'ensemble formant antenne ou des ensembles formant antennes dans une plage allant de ±2° à ±4° de l'angle d'élévation (θ) sans influer sur la sensibilité des capteurs et l'information d'étalonnage comprenant des données sur la manière de modifier une correction mécanique sous la forme d'un ajustement mécanique de l'ensemble formant antenne d'émission (7) et de l'ensemble formant antenne de réception (8) si l'écart défini de l'angle d'élévation déterminé (θ) par rapport à l'angle d'élévation déjà connu de l'un des objets (13) par rapport au véhicule routier (1) est supérieur à la plage allant de ±2° à ±4°,
l'émission du rayonnement radar (11) étant effectuée avec l'ensemble formant antenne d'émission (7) et/ou la réception du rayonnement radar réfléchi (14) étant effectuée avec l'ensemble formant antenne de réception (8), émission et réception lors desquelles l'au moins un brin d'antenne (91-98, 111-118, 131-138) et l'au moins un autre brin d'antenne sont orientés parallèlement quant à leurs directions longitudinales et, dans l'un des ensembles formant antennes (7 ; 8), les quelques brins d'antenne comprennent exactement deux groupes mutuellement disjoints de brins d'antenne parallèles entre eux, les brins d'antenne d'exactement deux groupes étant disposés à distance les uns des autres de manière alternée par rapport à leur association de groupe le long d'une direction d'ensemble transversale qui est orientée perpendiculairement à la direction longitudinale des brins d'antenne et qui est orientée parallèlement au plan de roulement et, à l'intérieur des exactement deux groupes, les brins d'antenne étant décalés les uns des autres non seulement transversalement à la direction longitudinale mais également parallèlement à la direction longitudinale, à chaque fois par rapport aux autres brins d'antenne du même groupe.

2. Procédé selon la revendication 1, **caractérisé en ce que** l'émission du rayonnement radar (11) est effectuée avec l'ensemble formant antenne d'émission (7) et/ou la réception du rayonnement radar réfléchi (14) est effectuée avec l'ensemble formant antenne de réception (8), émission et réception lors desquelles le plus petit décalage par rapport aux directions longitudinales des brins d'antenne (111, 113, 115, 117) du même groupe (124) est inférieur à une longueur d'onde du rayonnement radar pour l'émission ou la réception de laquelle l'ensemble formant antenne correspondant est optimisé ou est utilisé.

3. Procédé selon l'une des revendications précédentes, **caractérisé en ce que** les brins d'antenne (111-118) de chacun des exactement deux groupes (121, 122) sont chacun à égale distance par rapport à la direction d'orientation transversale.

4. Procédé selon l'une des revendications précédentes, **caractérisé en ce que** les brins d'antenne de l'un des exactement deux groupes présentent quant à leur disposition dans la direction de disposition transversale un décalage positif les uns par rapport aux autres dans la direction longitudinale et les brins d'antenne de l'autre des exactement deux groupes présentent un décalage négatif les uns par rapport aux autres quant à leur disposition dans la direction de disposition transversale.

5. Procédé selon l'une des revendications 1 ou 2, **caractérisé en ce que** l'émission du rayonnement radar (11) est effectuée avec un ensemble formant antenne d'émission (7) et/ou la réception du rayonnement radar réfléchi {14} est effectuée avec l'ensemble formant antennes de réception (8), émission et réception lors desquelles quelques brins d'antenne (111-118) sont disposés à égale distance transversalement à leurs extensions longitudinales.

6. Procédé selon l'une des revendications précédentes, **caractérisé en ce que** l'émission du rayonnement radar (11) est effectuée avec un ensemble formant antenne d'émission (7) et/ou la réception du rayonnement radar réfléchi (14) est effectuée avec l'ensemble formant antenne de réception (8), émission et réception lors desquelles les brins d'antenne d'un des ensembles formant antennes sont disposés dans un plan et l'ensemble formant antenne correspondant présente une symétrie spéculaire par rapport à un axe de symétrie (13) qui est situé dans le plan.
